# FASCICULE DE BREVET EUROPEEN

(11) **EP 0 628 457 B1**
(45) Date de publication et mention de la délivrance du brevet: **15.10.1997**
(21) Numéro de dépôt: 94108534.2
(22) Date de dépôt: 03.06.1994
(51) Int. Cl.: B60S 1/34

(54) **Essuie-glace de véhicule automobile, tête d'entraînement pour un tel essuie-glace, et coiffe de protection de la tête d'entraînement**
Scheibenwischer für Kraftfahrzeuge, mit Befestigungsteil dafür, und Schutzkappe für den Befestigungsteil
Windscreen wiper for a motor vehicle, with mounting head therefor and protective cap for the mounting head

(30) Priorité: 10.06.1993 FR 9306973
(43) Date de publication de la demande: 14.12.1994
(73) Titulaire: VALEO SYSTEMES D'ESSUYAGE, 78180 Montigny-Le-Bretonneux (FR)
(72) Inventeur: Vacher, Pascal, F-63500 Issoire (FR)
(74) Mandataire: Gamonal, Didier

(56) Documents cités:
- WO-A-93/09980
- DE-A- 4 128 705
- DE-C- 3 532 848
- FR-A- 2 195 957
- FR-A- 2 696 393
- GB-A- 2 188 537

## Description

La présente invention concerne un essuie-glace de véhicule automobile.

L'invention concerne plus particulièrement un essuie-glace du type comportant une tête d'entraînement qui comprend une partie avant sur laquelle est articulé un bras d'essuie-glace, autour d'un axe d'articulation qui s'étend selon une direction sensiblement perpendiculaire à la direction longitudinale de l'essuie-glace, qui porte un balai d'essuie-glace, et qui comprend une partie arrière comportant des moyens de fixation pour la tête d'entraînement sur l'extrémité d'un arbre d'entraînement en rotation de l'essuie-glace qui permet de l'entraîner dans un mouvement alternatif de rotation autour d'un axe qui est sensiblement perpendiculaire à l'axe d'articulation du bras sur la partie avant de la tête d'entraînement.

La fixation de la partie arrière de la tête d'entraînement sur l'extrémité de l'arbre d'entraînement est par exemple assurée au moyen d'un alésage conique qui traverse la tête d'entraînement et qui permet le passage de l'extrémité conique et filetée de l'arbre d'entraînement, et au moyen d'un écrou de serrage qui prend appui sur la face supérieure de la partie arrière de la tête d'entraînement.

Selon un agencement connu, la protection de la tête d'entraînement, et notamment des moyens de fixation, peut être assurée au moyen d'une coiffe amovible de protection qui comporte une paroi latérale qui entoure au moins partiellement au moins la face latérale de la partie arrière de la tête d'entraînement et une paroi supérieure qui recouvre au moins partiellement la face supérieure de la partie arrière de la tête d'entraînement et les moyens de fixation de cette partie arrière sur l'arbre d'entraînement.

Un premier exemple de réalisation d'une coiffe de protection est décrit et représenté dans le document FR-A-2.200.815 dans lequel la coiffe de protection est une pièce en deux parties articulées reliées entre elles par une charnière réalisée sous la forme d'une portion amincie de la paroi supérieure de la coiffe, et dont la fixation est assurée d'une part par emboîtement de la partie avant de la coiffe sur la partie avant de la tête d'entraînement et, d'autre part, par un bec de verrouillage formé à la partie inférieure de la portion arrière de la paroi latérale de la partie pivotante de la coiffe de protection.

Cet agencement permet d'assurer une protection efficace de la tête d'entraînement, mais il est peu fiable car la charnière d'articulation des deux parties de la coiffe est fragile et les moyens de maintien en position fermée de la partie pivotante de la coiffe n'assurent pas un verrouillage efficace.

De plus, le maintien de la coiffe en position longitudinale sur la tête d'entraînement n'est assuré que grâce à une portion d'extrémité galbée de la paroi supérieure de la partie fixe de la coiffe qui coopère avec une partie supérieure arrondie de la partie avant de la tête d'entraînement.

Un second exemple de réalisation d'une coiffe de protection est décrit et représenté dans le document DE-A-2.326.183 dans lequel la partie avant des parois latérales de la coiffe comporte un évidement concave ouvert en arc de cercle qui permet l'emboîtement élastique de la coiffe sur une portion correspondante de l'axe d'articulation du bras d'essuie-glace sur la tête d'entraînement.

Cet agencement est peu fiable car il autorise un déboîtement de la coiffe par simple traction de cette dernière d'avant en arrière et nécessite de plus de pouvoir disposer de suffisamment d'espace entre les faces latérales de la tête d'entraînement et les faces latérales extérieures de la portion du bras d'essuie-glace entre lesquelles doivent être reçues les parties avant évidées des parois latérales de la coiffe.

Dans un autre exemple de réalisation décrit dans le document DE-A-3 532 848, la coiffe comporte des protubérances sous forme de pions, saillant à partir de la face inférieure de la paroi supérieure de la coiffe, qui portent des becs de verrouillage en leurs extrémités libres de manière à verrouiller ladite coiffe par introduction des pions dans des ouvertures prévues dans la tête d'entraînement et par coopération des becs de verrouillage avec le bord des ouvertures.

Cet agencement est peu sûr dans le sens que lors d'une traction sur la coiffe, pour une intervention sur l'essuie-glace par exemple, les becs de verrouillage risquent de se casser et empêcher ainsi un remontage correct de la coiffe.

Afin de remédier à ces inconvénients, la présente invention propose un essuie-glace du type mentionné précédemment et divulgué dans DE-A-3 532 848, caractérisé en ce que la protubérance est une nervure qui s'étend longitudinalement depuis le bord avant de la paroi supérieure de la coiffe, en ce que l'ouverture est une fente longitudinale formée dans la partie avant de la tête d'entraînement et en ce que la nervure est reçue serrée entre les faces opposées de la fente.

Selon des caractéristiques ayant trait à un mode de réalisation de l'invention:
- la fente est une fente médiane qui divise verticalement la partie avant de la tête d'entraînement en deux joues latérales parallèles ;
- la tête d'entraînement comporte une tige qui s'étend transversalement dans ladite fente pour permettre l'accrochage d'un ressort de pression d'essuyage dont une extrémité est reçue entre lesdites joues ;
- la nervure est constituée par deux voiles parallèles qui s'étendent verticalement en saillie depuis la face intérieure de la paroi supérieure de la coiffe ;
- les deux voiles parallèles sont reliés entre eux par une âme transversale de renfort qui s'étend verticalement en saillie depuis la face intérieure de la paroi supérieure de la coiffe ;
- l'âme transversale de renfort est située sensiblement à mi-longueur de la nervure ;
- le profil du bord inférieur de la nervure est complémentaire du profil de la portion en vis-à-vis du fond de la fente ;
- les moyens de maintien comportent un bec d'articulation formé sur la coiffe qui coopère avec une partie complémentaire de la tête d'entraînement de manière à permettre le pivotement de la coiffe autour d'un axe perpendiculaire à la direction principale de la nervure ;
- le bec d'articulation est formé au voisinage du bord avant de la face intérieure de la paroi supérieure de la coiffe et qu'il coopère avec un logement complémentaire formé en vis-à-vis dans la tête d'entraînement ;
- le bec d'articulation est constitué par une portion de profil convexe en arc de cercle d'une aile qui s'étend verticalement depuis la face intérieure de la paroi supérieure de la coiffe et qui est reçue dans un logement cylindrique concave ouvert formé dans la partie avant de la tête d'entraînement ;
- l'aile est parallèle aux voiles ;
- l'aile est décalée latéralement par rapport à la nervure et le logement cylindrique concave ouvert est formé dans la portion en vis-à-vis du bord d'une des joues latérales parallèles de la partie avant de la tête d'entraînement ;
- l'aile est reliée au voile adjacent de la nervure par l'âme transversale de renfort ;
- les moyens d'articulation comportent deux becs d'articulation agencés sensiblement symétriquement de part et d'autre de la nervure ;
- la coiffe comporte au moins un bec de verrouillage formé en saillie sur la face intérieure de la coiffe et qui coopère avec une encoche formée en vis à vis dans la tête d'entraînement ;
- le bec de verrouillage est formé sur la face intérieure de la paroi arrière de la coiffe, au voisinage du bord inférieur de cette dernière, et il coopère avec une encoche formée en vis-à-vis dans la face inférieure de la partie arrière de la tête d'entraînement ;
- la paroi supérieure de la coiffe se prolonge au-delà de son bord avant par un volet qui s'étend en dessous de la face supérieure du bras d'essuie-glace ;
- la coiffe est une pièce moulée en matière plastique.

L'invention propose également une coiffe de protection pour un essuie-glace réalisé conformément aux enseignements de l'invention, ainsi qu'une tête d'entraînement pour un essuie-glace réalisé conformément aux enseignements de l'invention.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de la partie arrière d'un essuie-glace selon l'invention dont la coiffe de protection de la tête d'entraînement est représentée en arrachement partiel ;
- la figure 2 est une vue en perspective de la coiffe de protection équipant l'essuie-glace illustré à la figure 1 ;
- la figure 3 est une vue en section partielle, selon la ligne 3-3 de la figure 4, de la tête d'entraînement de l'essuie-glace de la figure 1 ;
- la figure 4 est une vue de dessus de la tête d'entraînement de la figure 3 ;
- la figure 5 est une vue en coupe selon la ligne 5-5 de la figure 6 de la coiffe de protection ;
- la figure 6 est une vue de dessus de la coiffe de la figure 5 ;
- la figure 7 est une vue en section selon la ligne 7-7 de la figure 5 ;
- la figure 8 est une vue, en section selon la ligne 8-8 de la figure 6 illustrant la coiffe en position montée et verrouillée sur la tête d'entraînement ; et
- la figure 9 est une vue partielle de la partie avant de la figure 8 prise en section selon la ligne 9-9 de la figure 6.

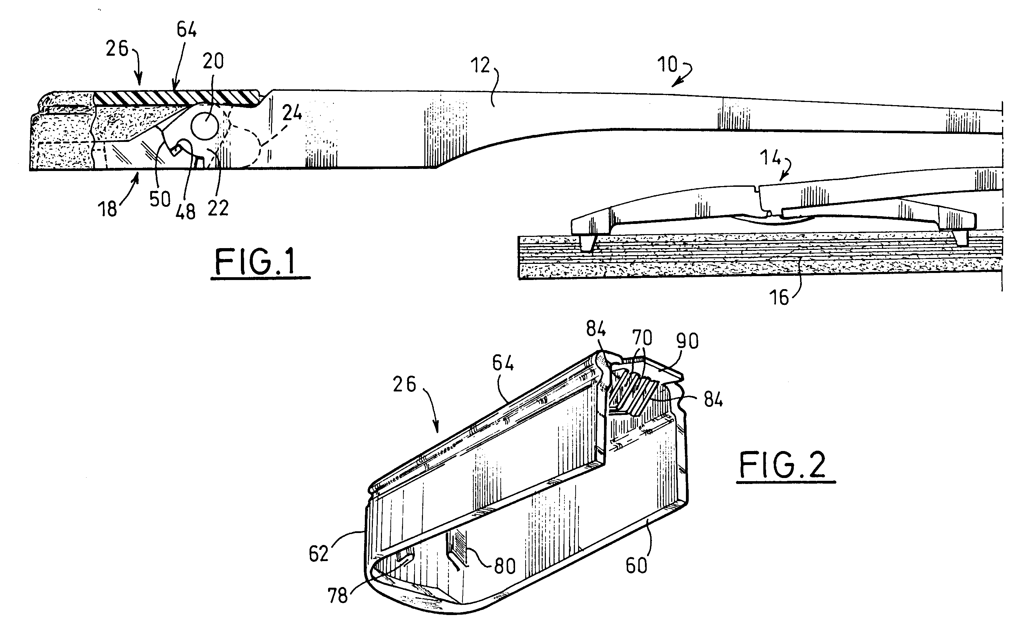

L'essuie-glace 10 schématisé à la figure 1 comporte un bras d'essuie-glace 12 qui porte, par l'intermédiaire d'une structure articulée de support 14, une lame d'essuyage 16.

Le bras d'essuie-glace 12 est articulé sur une tête d'entraînement 18 autour d'un axe d'articulation 20 qui s'étend selon une direction sensiblement perpendiculaire à la direction générale du bras d'essuie-glace.

La partie arrière 22 du bras d'essuie-glace 12 articulé sur la partie avant 24 de la tête d'entraînement 18 est protégée, ainsi que cette dernière, par une coiffe de protection moulée en matière plastique 26.

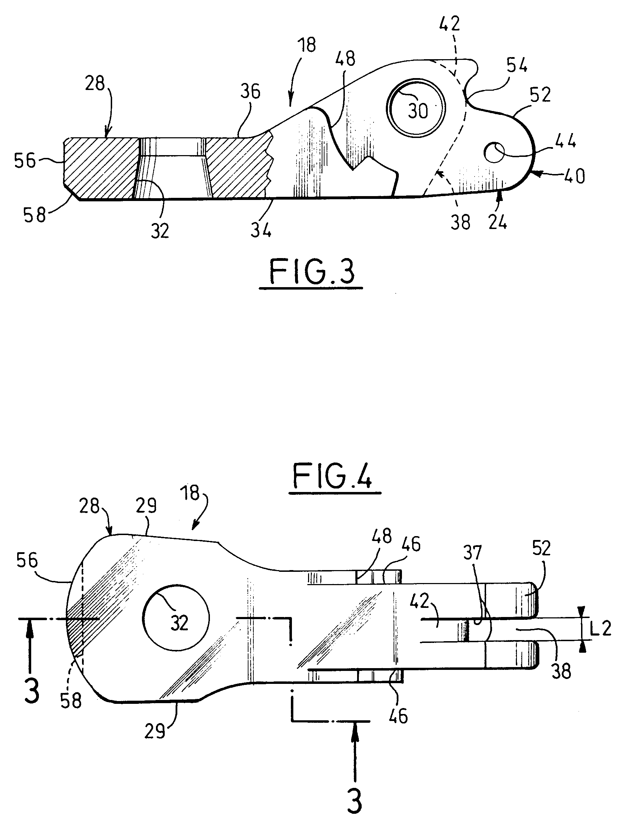

La tête d'entraînement 18, illustrée en détail aux figures 3 et 4, se compose selon une technique connue d'une partie arrière 28 en forme de plaque qui en permet le montage et la fixation sur un arbre d'entraînement (non représenté) et d'une partie avant 24 qui permet l'articulation de la partie arrière 22 du bras d'essuie-glace au moyen de l'axe 20 qui est reçu dans un perçage 30 de cette partie avant.

A cet effet, la pièce 18 est une pièce de fonderie dont la partie arrière massive 28 comporte un alésage épaulé et partiellement conique 32 qui s'étend depuis la face inférieure plane 34 jusqu'à la face supérieure plane 36 de la partie arrière 28.

Les moyens de fixation de la partie arrière 28 sur une extrémité d'un arbre d'entraînement complémentaire comportent également un écrou de serrage (non représenté) qui est prévu pour prendre appui sur la face supérieure 36 de la partie arrière et provoquer le coincement des portions coniques mâle et femelle de l'arbre d'entraînement et de la partie arrière de la tête d'entraînement.

La partie avant 24 est divisée en deux parties par une fente longitudinale médiane 38 qui délimite deux joues latérales parallèles 40, également appelées cornes.

Le profil 42 délimitant le fond de la fente 38 présente un contour sensiblement en forme d'arc de cercle centré sur l'axe du perçage 30.

Chacune des joues latérales 40 comporte un perçage 44, ces deux perçages alignés étant prévus pour recevoir une tige d'accrochage (non représentée) pour l'accrochage de l'extrémité d'un ressort de pression d'essuyage (non représenté) dont l'autre extrémité est accrochée sur le bras d'essuie-glace 12.

Chacune des faces latérales opposées 46 de la partie médiane de la tête d'entraînement 18 comporte un profil cranté en saillie 48 qui est prévu pour coopérer avec un profil correspondant 50 de la partie arrière 22 du bras d'essuie-glace 12 pour limiter les déplacements angulaires de ce dernier autour de son axe d'articulation.

La partie supérieure du bord avant 52 de chaque joue 40 comporte chacune un logement en forme de cylindre creux ouvert 54 dont la fonction sera expliquée par la suite.

La face inférieure 34 de la partie arrière 28 comporte, au voisinage de l'extrémité arrière 56 de cette partie 28, une encoche de verrouillage 58 dont la fonction sera expliquée par la suite.

Comme on peut le voir notamment sur les figures 2 et 5 à 7, la coiffe 26 est une pièce moulée en matière plastique creuse en forme de chape qui présente, en section par un plan transversal vertical perpendiculaire à la direction longitudinale de l'essuie-glace, une forme en U renversé.

La coiffe 26 comporte à cet effet une paroi latérale constituée par deux joues latérales parallèles 60 et par une portion arrière 62, ainsi qu'une paroi supérieure, ou dos supérieur, sensiblement plane 64.

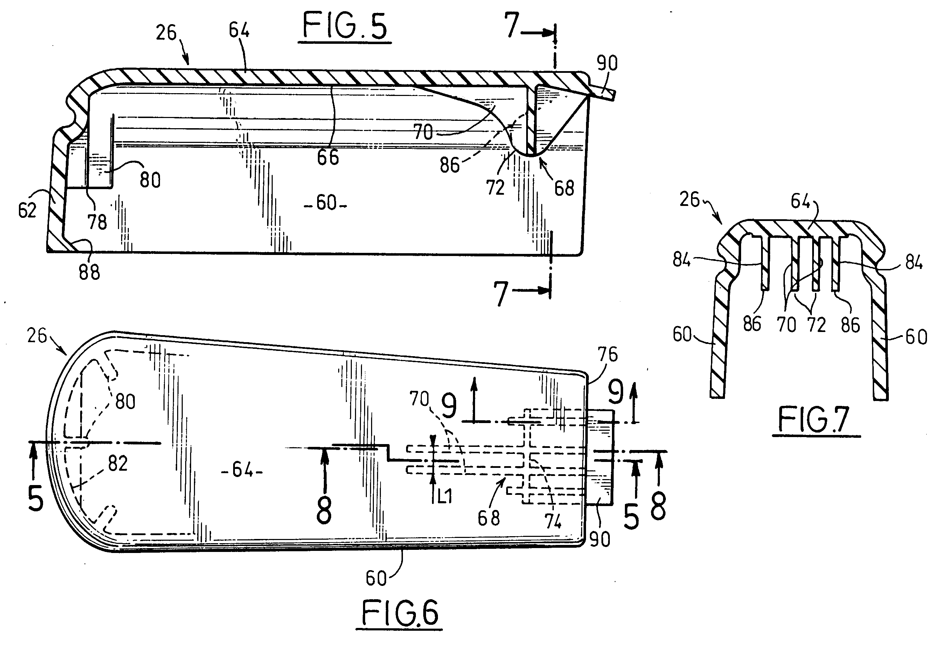

Conformément à l'invention, la face intérieure 66 de la paroi supérieure 64 comporte, dans sa partie avant, c'est-à-dire à droite en considérant les figures 5 et 6, une nervure médiane longitudinale de maintien 68.

La nervure 68 est constituée par deux voiles parallèles et identiques 70 qui s'étendent verticalement depuis la face 66 à l'intérieur de la coiffe 26. Dans sa partie arrière, tournée vers la gauche en considérant les figures 5 et 6, le bord inférieur 72 de chaque voile 70 présente un profil courbe qui est complémentaire du profil arrondi 42 du fond de la fente 38 de la tête d'entraînement 18.

Les deux voiles 70 constituant la nervure 68 sont reliés entre eux par une âme transversale de renfort 74 qui s'étend transversalement, c'est-à-dire sensiblement parallèlement au bord libre avant 76 de la paroi supérieure 64, entre les deux voiles 70 et latéralement de part et d'autre des faces latérales extérieures opposées de ces deux voiles, en étant situé sensiblement à mi-longueur des voiles.

La largeur L1 qui sépare ces faces latérales extérieures des voiles 70 a, conformément à l'invention, une valeur supérieure à la largeur L2 de la fente 38 de manière que, en position montée de la coiffe sur la tête d'entraînement 18, la nervure 68 soit montée serrée dans la fente 38 afin d'assurer le maintien en position de la coiffe 26 sur la tête d'entraînement 18.

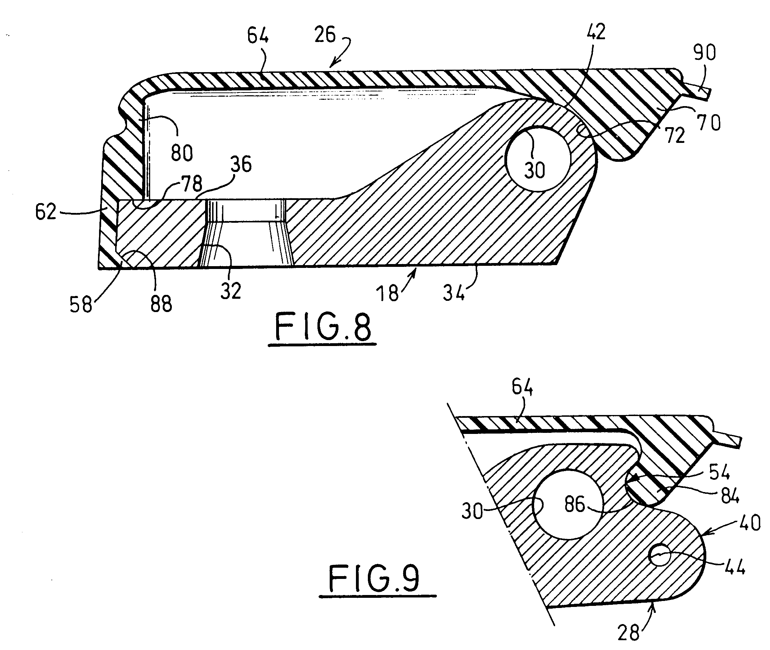

La position horizontale de la coiffe par rapport à la tête d'entraînement est déterminée par la face inférieure 78 de trois moulures verticales de renfort 80 formées en saillie sur la face intérieure 82 de la portion arrière 62 de la paroi latérale de la coiffe. Cette face inférieure 78 est prévue pour coopérer avec la portion en vis-à-vis de la face supérieure 36 de la partie arrière 28 de la tête d'entraînement 18, comme cela est illustré à la figure 8, tandis que le bord 72 des voiles 70 est en appui sur le fond 42 de la fente 38.

Comme on peut le voir notamment sur les figures 2 et 6, la face intérieure 66 de la paroi supérieure 64 de la coiffe 26 comporte également deux ailes 84 qui sont réalisées venues de moulage et qui s'étendent longitudinalement parallèlement aux voiles 70 en étant reliés à ces voiles par l'âme de renfort 74.

Chaque aile 84 s'étend longitudinalement depuis le bord avant 76 de la paroi supérieure 64, avec un profil identique, dans cette zone avant, à celui des voiles 70, et vers l'arrière au-delà de l'âme transversale de renfort 74, par une portion, plus courte que celles des voiles 70, qui confère au bord inférieur de ces ailes 84 un profil en bec en arc de cercle convexe 86 (voir figures 5 et 9).

Comme on peut le voir notamment à la figure 9, le profil en bec en arc de cercle 86 du bord inférieur de chaque aile 84 est complémentaire du profil du logement cylindrique creux 54 formé dans la joue latérale 40 associée à l'aile 84 correspondante.

Les bords inférieurs 86 des ailes 84 constituent deux becs d'articulation, agencés sensiblement symétriquement de part et d'autre de la nervure de maintien 68, dont chacun est reçu dans un logement 54 pour permettre un mouvement d'articulation en pivotement de la coiffe 26 par rapport à la tête d'entraînement 18 en vue de faciliter sa mise en place sur la tête d'entraînement 18 et d'améliorer son maintien sur cette dernière en position verrouillée.

Le bord inférieur de la partie arrière 62 de la paroi latérale de la coiffe 26 comporte un bec de verrouillage 88 qui s'étend en saillie vers l'intérieur depuis la face interne 82 et dont le profil est complémentaire de celui de l'encoche de verrouillage 58 formée dans la face inférieure 34 de la tête d'entraînement 18.

Enfin, la paroi supérieure 64 de la coiffe 26 se prolonge vers l'avant, au-delà de son bord avant 76 par un volet 90, qui s'étend dans un plan légèrement incliné par rapport au plan de la paroi supérieure 64 pour être reçu en-dessous du dos supérieur de la partie arrière du bras d'essuie-glace, comme cela est schématisé sur la figure 1.

La mise en place de la coiffe s'effectue de la manière suivante.

L'opérateur met en place les becs d'articulation 86 dans les logements 54 en faisant occuper à la coiffe 26 une position décalée angulairement, dans le sens horaire en considérant la figure 8, par rapport à la position montée et verrouillée illustrée à la figure 8, d'un angle d'environ 90°.

En partant de cette position, l'opérateur provoque le basculement, dans le sens antihoraire, de la coiffe 26 par rapport à la tête d'entraînement 18 jusqu'à provoquer son verrouillage dans une position correspondant à la venue en appui de la face inférieure 78 des moulures 80 sur la face supérieure 36 de la tête d'entraînement 18 et jusqu'à l'encliquetage du bec de verrouillage 88 dans l'encoche de verrouillage 58.

Lors de ce mouvement de pivotement, la nervure de maintien 68 constituée par les deux voiles 70 pénètre dans la fente 38 et est coincée dans cette dernière du fait du phénomène de serrage latéral des voiles 70 entre les faces parallèles et opposées 37 de la fente 38.

Dans la position verrouillée illustrée aux figures 8 et 9, la coiffe 26 est parfaitement en position sur la tête d'entraînement 18 et est parfaitement maintenue sur cette dernière.

Tout déplacement latéral de la coiffe est également empêché du fait de la similitude et du dimensionnement des joues latérales 60 de la paroi latérale de la coiffe et des faces latérales correspondantes 29 de la partie arrière 28 de la tête d'entraînement 18.

## Revendications

1. Essuie-glace (10) de véhicule automobile du type comportant une tête d'entraînement (18) qui comprend une partie avant (24) sur laquelle est articulé un bras d'essuie-glace (12) qui porte un balai d'essuie-glace (14) et une partie arrière (28) comportant des moyens (32) de fixation de la tête d'entraînement sur l'extrémité d'un arbre d'entraînement en rotation de l'essuie-glace, et comportant une coiffe amovible (26) de protection des moyens de fixation qui comporte une paroi latérale (60, 62) qui entoure au moins partiellement la face latérale (29) de la partie arrière (28) de la tête d'entraînement (18) et une paroi supérieure (64) qui recouvre au moins partiellement la face supérieure (36) de la tête d'entraînement (18) et les moyens de fixation de cette partie arrière sur l'arbre d'entraînement et qui comporte des moyens (38, 68) de maintien en position de la coiffe (26) de la tête d'entraînement (18), lesdits moyens de maintien de la coiffe comportant une protubérance (68) formée sur la face intérieure (66) de la paroi supérieure (64) de la coiffe (26) et qui est reçue entre les faces opposées (37) d'une ouverture (38) formée dans la tête d'entraînement (18, 24), caractérisé en ce que la protubérance est une nervure (68) qui s'étend longitudinalement depuis le bord avant (76) de la paroi supérieure (64) de la coiffe (26), en ce que l'ouverture est une fente longitudinale (38) formée dans la partie avant (24) de la tête d'entraînement et en ce que la nervure (68) est reçue serrée entre les faces opposées (37) de la fente (38).

2. Essuie-glace selon la revendication 1, caractérisé en ce que la fente (38) est une fente médiane qui divise verticalement la partie avant (24) de la tête d'entraînement en deux joues latérales parallèles (40).

3. Essuie-glace selon la revendication 2, caractérisé en ce que la tête d'entraînement (18) comporte une tige qui s'étend transversalement dans ladite fente (38) pour permettre l'accrochage d'un ressort de pression d'essuyage dont une extrémité est reçue entre les joues (40).

4. Essuie-glace selon l'une quelconque des revendications précédentes, caractérisé en ce que la nervure (68) est constituée par deux voiles parallèles (70) qui s'étendent verticalement en saillie depuis la face intérieure (66) de la paroi supérieure (64) de la coiffe (26).

5. Essuie-glace selon la revendication 4, caractérisé en ce que les deux voiles parallèles (70) sont reliés entre eux par une âme transversale de renfort (74) qui s'étend verticalement en saillie depuis la face intérieure (66) de la paroi supérieure (64) de la coiffe.

6. Essuie-glace selon la revendication 5, caractérisé en ce que l'âme transversale de renfort est située sensiblement à mi-longueur de la nervure (68).

7. Essuie-glace selon l'une quelconque des revendications précédentes, caractérisé en ce que le profil du bord inférieur (72) de la nervure (68) est complémentaire du profil (42) de la portion en vis-à-vis du fond de la fente (38).

8. Essuie-glace selon l'une quelconque des revendications précédentes, caractérisé en ce que les moyens de maintien comportent un bec d'articulation (86) formé sur la coiffe (26) qui coopère avec une partie complémentaire (54) de la tête d'entraînement de manière à permettre le pivotement de la coiffe (26) autour d'un axe perpendiculaire à la direction principale de la nervure (68).

9. Essuie-glace selon la revendication 8, caractérisé en ce que le bec d'articulation (86) est formé sur la face intérieure (66) de la paroi supérieure (64) de la coiffe (26) et en ce qu'il coopère avec un logement complémentaire (54) formé en vis-à-vis dans la tête d'entraînement (18).

10. Essuie-glace selon la revendication 9, caractérisé en ce que le bec d'articulation (86) est constitué par une portion de profil convexe en arc de cercle d'une aile (84) qui s'étend verticalement depuis la face intérieure (66) de la paroi supérieure (64) de la coiffe et qui est reçue dans un logement cylindrique concave ouvert (54) formé dans la partie avant de la tête d'entraînement.

11. Essuie-glace selon la revendication 10 prise en combinaison avec l'une quelconque des revendications 4 à 6, caractérisé en ce que l'aile (84) est parallèle auxdits voiles (70).

12. Essuie-glace selon la revendication 11 prise en combinaison avec l'une des revendications 2 ou 3, caractérisé en ce que l'aile (84) est décalée latéralement par rapport à la nervure (68), et en ce que ledit logement cylindrique concave ouvert (54) est formé dans la portion en vis-à-vis du bord (52) d'une des joues latérales parallèles (40) de la partie avant (24) de la tête d'entraînement (18).

13. Essuie-glace selon l'une des revendications 11 ou 12 prises en combinaison avec l'une des revendications 5 ou 6, caractérisé en ce que l'aile (84) est reliée au voile adjacent (70) de la nervure (68) par ladite âme transversale de renfort (74).

14. Essuie-glace selon l'une quelconque des revendications 8 à 13, caractérisé en ce que les moyens d'articulation de la coiffe comportent deux becs d'articulation (86) agencés sensiblement symétriquement de part et d'autre de la nervure (68).

15. Essuie-glace selon l'une quelconque des revendications précédentes, caractérisé en ce que la coiffe (26) comporte au moins un bec de verrouillage (88) formé en saillie sur la face intérieure de la coiffe et qui coopère avec une encoche (58) formée en vis à vis dans la tête d'entraînement (18).

16. Essuie-glace selon la revendication 6, caractérisé en ce que le bec de verrouillage (88) est formé sur la face intérieure (82) de la paroi arrière (62) de la coiffe, au voisinage du bord inférieur de cette dernière, et en ce qu'il coopère avec une encoche (58) formée en vis-à-vis dans la face inférieure (34) de la partie arrière (28) de la tête d'entraînement (18).

17. Essuie-glace selon l'une quelconque des revendications précédentes, caractérisé en ce que la paroi supérieure (64) de la coiffe (26) se prolonge, au-delà de son bord avant (76), par un volet (90) qui s'étend en dessous de la face supérieure du bras d'essuie-glace (12).

## Claims

1. Motor vehicle wiper (10) of the type having a drive head (18) which comprises a front part (24) on which is articulated a wiper arm (12) which carries a wiper blade (14) and a rear part (28) having means (32) of fixing the drive head on the end of a shaft driving the wiper in rotation, and having a removable cover (26) for protecting the fixing means which has a lateral wall (60, 62) which at least partially surrounds the lateral face (29) of the rear part (28) of the drive head (18) and a top wall (64) which at least partially covers the top face (36) of the drive head (18) and the means of fixing this rear part to the drive shaft and which has means (38, 68) for holding in position the cover (26) on the drive head (18), the said means of holding the cover having a protuberance (68) formed on the bottom face (66) of the top wall (64) of the cover (26) and which is received between the opposite faces (37) of an opening (38) formed in the drive head (18, 24), characterised in that the protuberance is a rib (68) which extends longitudinally from the front edge (76) of the top wall (64) of the cover (26), in that the opening is a longitudinal slot (38) formed in the front part (24) of the drive head and in that the rib (68) is received clamped between the opposite faces (37) of the slot (38).

2. Wiper according to Claim 1, characterised in that the slot (38) is a median slot which vertically divides the front part (24) of the drive head into two parallel lateral cheeks (40).

3. Wiper according to Claim 2, characterised in that the drive head (18) has a stem which extends transversely into the said slot (38) to allow the attachment of a wiping-pressure spring, one end of which is received between the cheeks (40).

4. Wiper according to any one of the preceding claims, characterised in that the rib (68) consists of two parallel plates (70) which extend vertically, projecting from the internal face (66) of the top wall (64) of the cover (26).

5. Wiper according to Claim 4, characterised in that the two parallel plates (70) are connected together by a transverse reinforcement web (74) which extends vertically, projecting from the internal face (66) of the top wall (64) of the cover.

6. Wiper according to Claim 5, characterised in that the transverse reinforcing web is situated substantially halfway along the rib (68).

7. Wiper according to any one of the preceding claims, characterised in that the profile of the bottom edge (72) of the rib (68) is complementary to the profile (42) of the facing portion of the bottom of the slot (38).

8. Wiper according to any one of the preceding claims, characterised in that the holding means include an articulation nose (86) formed on the cover (26) which cooperates with a complementary part (54) of the drive head so as to allow the cover (26) to pivot about an axis perpendicular to the principal direction of the rib (68).

9. Wiper according to Claim 8, characterised in that the articulation nose (86) is formed on the internal face (66) of the top wall (64) of the cover (26) and in that it cooperates with a complementary housing (54) formed opposite in the drive head (18).

10. Wiper according to Claim 9, characterised in that the articulation nose (86) consists of a convex profile portion, in the shape of an arc of a circle, of a flange (84) which extends vertically from the internal face (66) of the top wall (64) of the cover and which is received in an open concave cylindrical housing (54) formed in the front part of the drive head.

11. Wiper according to Claim 10 taken in combination with any one of Claims 4 to 6, characterised in that the flange (84) is parallel to the said plates (70).

12. Wiper according to Claim 11 taken in combination with one of Claims 2 or 3, characterised in that the flange (84) is offset laterally with respect to the rib (68), and in that the said open concave cylindrical housing (54) is formed in the facing portion of the edge (52) of one of the parallel lateral cheeks (40) of the front part (24) of the drive head (18).

13. Wiper according to one of Claims 11 or 12 taken in combination with one of Claims 5 or 6, characterised in that the flange (84) is connected to the adjacent plate (70) of the rib (68) by the said transverse reinforcing web (74).

14. Wiper according to any one of Claims 8 to 13, characterised in that the articulation means of the cover include two articulation noses (86) arranged substantially symmetrically on each side of the rib (68).

15. Wiper according to any one of the preceding claims, characterised in that the cover (26) has at least one locking nose (88) formed projecting on the internal face of the cover and which cooperates with a notch (58) formed opposite in the drive head (18).

16. Wiper according to Claim 6, characterised in that the locking nose (88) is formed on the internal face (82) of the rear wall (62) of the cover, in the vicinity of the lower edge of the latter, and in that it cooperates with a notch (58) formed opposite in the bottom face (34) of the rear part (28) of the drive head (18).

17. Wiper according to any one of the preceding claims, characterised in that the top wall (64) of the cover (26) is extended, beyond its front edge (76), by a flap (90) which extends below the top face of the wiper arm (12).

## Patentansprüche

1. Scheibenwischer (10), umfassend einen Antriebskopf (Befestigungsteil) (18), der einen vorderen Teil (24), an dem ein Scheibenwischerarm (12) angelenkt ist, der ein Scheibenwischerblatt (14) trägt, und einen hinteren Teil (28) enthält, der Mittel (32) zur Befestigung des Antriebskopfes (Befestigungsteils) am Ende einer Antriebswelle für den drehenden Antrieb des Scheibenwischers umfaßt, sowie eine abnehmbare Schutzkappe (26) für die Befestigungsmittel, die eine Seitenwand (60, 62), die zumindest teilweise die Seitenfläche (29) des hinteren Teils (28) des Antriebskopfes (Befestigungsteils) (18) umgibt, und eine obere Wand (64) umfaßt, die zumindest teilweise die Oberseite (36) des Antriebskopfes (Befestigungsteils) (18) und die Befestigungsmittel zur Befestigung dieses hinteren Teils an der Antriebswelle bedeckt und die Mittel (38, 68) zur Positionsicherung der Schutzkappe (26) des Antriebskopfes (Befestigungsteils) (18) umfaßt, wobei diese Mittel zur Positionssicherung der Schutzkappe eine Ausstülpung (68) enthalten, die an der Innenseite (66) der oberen Wand (64) der Schutzkappe (26) ausgebildet ist und die zwischen den gegenüberliegenden Flächen (37) einer in den Antriebskopf (Befestigungsteil) (18, 24) eingearbeiteten Öffnung (38) eingesetzt ist, **dadurch gekennzeichnet,** daß die Ausstülpung eine Rippe (68) ist, die sich in Längsrichtung von der Vorderkante (76) der oberen Wand (64) der Schutzkappe (26) aus erstreckt, daß die Öffnung ein Längsschlitz (38) ist, der in den vorderen Teil (24) des Antriebskopfes (Befestigungsteils) eingearbeitet ist, und daß die Rippe (68) zwischen den gegenüberliegenden Flächen (37) des Schlitzes (38) fest eingespannt ist.

2. Scheibenwischer nach Anspruch 1 , **dadurch gekennzeichnet,** daß der Schlitz (38) ein Mittelschlitz ist, der den vorderen Teil (24) des Antriebskopfes (Befestigungsteils) vertikal in zwei parallele Seitenwangen (40) unterteilt.

3. Scheibenwischer nach Anspruch 2 , **dadurch gekennzeichnet,** daß der Antriebskopf (Befestigungsteil) (18) einen Stift umfaßt, der sich quer in den besagten Schlitz (38) erstreckt, um das Einhaken einer Wischeranpreßfeder zu ermöglichen, von der ein Ende zwischen den besagten Seitenwangen (40) eingesetzt ist.

4. Scheibenwischer nach einem der vorangehenden Ansprüche, **dadurch gekennzeichnet**, daß die Rippe (68) aus zwei parallelen Zwischenstücken ken (70) besteht, die sich von der Innenseite (66) der oberen Wand (64) der Schutzkappe (26) aus vertikal vorstehend erstrecken.

5. Scheibenwischer nach Anspruch 4 , **dadurch gekennzeichnet**, daß die beiden parallelen Zwischenstücke (70) durch einen Verstärkungsquersteg (74) miteinander verbunden sind, der sich von der Innenseite (66) der oberen Wand (64) der Schutzkappe aus vertikal vorstehend erstreckt.

6. Scheibenwischer nach Anspruch 5 , **dadurch gekennzeichnet,** daß der Verstärkungsquersteg in etwa auf halber Länge der Rippe (68) angeordnet ist.

7. Scheibenwischer nach einem der vorangehenden Ansprüche, **dadurch gekennzeichnet**, daß das Profil der Unterkante (72) der Rippe (68) formschlüssig zum Profil (42) des gegenüberliegenden Teilstücks des Bodens des Schlitzes (38) ausgeführt ist.

8. Scheibenwischer nach einem der vorangehenden Ansprüche, **dadurch gekennzeichnet**, daß die Sicherungsmittel eine auf der Schutzkappe (26) ausgebildete Gelenknase (86) umfassen, die mit einem formschlüssigen Teil (54) des Antriebskopfes (Befestigungsteils) zusammenwirkt, um die Schwenkbewegung der Schutzkappe (26) um eine Achse zu ermöglichen, die senkrecht zur Hauptrichtung der Rippe (68) verläuft.

9. Scheibenwischer nach Anspruch 8 , **dadurch gekennzeichnet**, daß die Gelenknase (86) an der Innenseite (66) der oberen Wand (64) der Schutzkappe (26) ausgebildet ist und daß sie mit einer formschlüssigen Aufnahme (54) zusammenwirkt, die gegenüberliegend im Antriebskopf (Befestigungsteil) (18) ausgebildet ist.

10. Scheibenwischer nach Anspruch 9 , **dadurch gekennzeichnet**, daß die Gelenknase (86) aus einem kreisbogenförmigen konvexen Profilteilstück eines Schenkels (84) besteht, der sich vertikal von der Innenseite (66) der oberen Wand (64) der Schutzkappe aus erstreckt und der in eine offene konkave zylindrische Aufnahme (54) eingesetzt ist, die im vorderen Teil des Antriebskopfes (Befestigungsteils) ausgebildet ist.

11. Scheibenwischer nach Anspruch 10 in Kombination mit einem der Ansprüche 4 bis 6, **dadurch gekennzeichnet**, daß der Schenkel (84) parallel zu den besagten Zwischenstücken (70) verläuft.

12. Scheibenwischer nach Anspruch 11 in Kombination mit einem der Ansprüche 2 oder 3, **dadurch gekennzeichnet**, daß der Schenkel (84) seitlich im Verhältnis zur Rippe (68) versetzt ist und daß die besagte offene konkave zylindrische Aufnahme (54) im gegenüberliegenden Teilstück der Kante (52) einer der parallelen Seitenwangen (40) des vorderen Teils (24) des Antriebskopfes (Befestigungsteils) (18) ausgebildet ist.

13. Scheibenwischer nach einem der Ansprüche 11 oder 12 in Kombination mit einem der Ansprüche 5 oder 6, **dadurch gekennzeichnet**, daß der Schenkel (84) mit dem angrenzenden Zwischenstück (70) der Rippe (68) durch den Verstärkungsquersteg (74) verbunden ist.

14. Scheibenwischer nach einem der Ansprüche 8 bis 13, **dadurch gekennzeichnet**, daß die Gelenkmittel der Schutzkappe zwei Gelenknasen (86) umfassen, die in etwa symmetrisch beiderseits der Rippe (68) angeordnet sind.

15. Scheibenwischer nach einem der vorangehenden Ansprüche, **dadurch gekennzeichnet**, daß die Schutzkappe (26) mindestens eine Verriegelungsnase (88) umfaßt, die vorstehend an der Innenseite der Schutzkappe ausgebildet ist und mit einer Ausklinkung (58) zusammenwirkt, die gegenüberliegend im Antriebskopf (Befestigungsteil) (18) ausgebildet ist.

16. Scheibenwischer nach Anspruch 6 , **dadurch gekennzeichnet,** daß die Verriegelungsnase (88) an der Innenseite (82) der hinteren Wand (62) der Schutzkappe, in der Nähe der Unterkante dieser Kappe, ausgebildet ist und daß sie mit einer Ausklinkung (58) zusammenwirkt, die gegenüberliegend in der Unterseite (34) des hinteren Teils (28) des Antriebskopfes (Befestigungsteils) (18) ausgebildet ist.

17. Scheibenwischer nach einem der vorangehenden Ansprüche, **dadurch gekennzeichnet**, daß die obere Wand (64) der Schutzkappe (26) über ihre Vorderkante (76) hinaus durch eine Lasche (90) verlängert wird, die sich unterhalb der Oberseite des Scheibenwischerarms (12) erstreckt.
